(19)

Europäisches
Patentamt
European
Patent Office
Office européen
des brevets

(11) **EP 4 160 589 A1**

(12) **EUROPEAN PATENT APPLICATION**
published in accordance with Art. 153(4) EPC

(43) Date of publication:
**05.04.2023 Bulletin 2023/14**

(21) Application number: **21859927.2**

(22) Date of filing: **12.07.2021**

(51) International Patent Classification (IPC):
*G09G 5/10* (2006.01)  *G01J 1/42* (2006.01)
*G01J 1/04* (2006.01)  *G01J 5/60* (2006.01)
*G01J 5/08* (2006.01)

(86) International application number:
**PCT/CN2021/105769**

(87) International publication number:
**WO 2022/042087 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.08.2020 CN 202010887657**

(71) Applicant: **GUANGDONG OPPO MOBILE
TELECOMMUNICATIONS
CORP., LTD.
Dongguan, Guangdong 523860 (CN)**

(72) Inventors:
• **GE, Licheng**
**Dongguan, Guangdong 523860 (CN)**
• **ZHANG, Haiping**
**Dongguan, Guangdong 523860 (CN)**

(74) Representative: **Mewburn Ellis LLP
Aurora Building
Counterslip
Bristol BS1 6BX (GB)**

(54) **DISPLAY APPARATUS, ELECTRONIC DEVICE, AND CONTROL METHOD FOR ELECTRONIC
DEVICE**

(57)     A display apparatus, an electronic device, and
a control method for an electronic device are provided in
the disclosure. The display apparatus includes a display
screen, a light adjusting assembly, a first light sensor,
and a second light sensor. The light adjusting assembly
is configured to filter ambient light passing through the
display screen and light emitted by the display screen,
to make the first light sensor receive ambient light in a
first wavelength band and light emitted by the display
screen in the first wavelength band and the second light
sensor receive ambient light in a second wavelength
band and light emitted by the display screen in the second
wavelength band.

FIG. 11

EP 4 160 589 A1

## Description

CROSS-REFERENCE TO RELATED APPLICATION(S)

This application claims priority to Chinese Patent Application No. 202010887657.X, filed August 28, 2020, entitled "DISPLAY APPARATUS, ELECTRONIC DEVICE, AND CONTROL METHOD FOR ELECTRONIC DEVICE", the entire disclosure of which is hereby incorporated by reference.

TECHNICAL FIELD

This disclosure relates to the field of electronic technology, in particular to a display apparatus, an electronic device, and a control method for an electronic device.

BACKGROUND

With the development of electronic technologies, screen-to-body ratios of electronic devices such as smart phones are increasing, so that a region for setting electronic means such as sensors on a display screen of the electronic device is becoming smaller and smaller. Therefore, for more and more electronic devices, a light sensor is disposed under the display screen, to detect ambient light through the light sensor.

SUMMARY

The disclosure provides a display apparatus, an electronic device, and a control method for an electronic device.

In a first aspect, the disclosure provides a display apparatus. The display apparatus includes a display screen, a light adjusting assembly, a first light sensor, and a second light sensor. The light adjusting assembly is disposed at one side of the display screen. The first light sensor is disposed at one side of the light adjusting assembly away from the display screen. The second light sensor is disposed at the side of the light adjusting assembly away from the display screen. The light adjusting assembly is configured to filter ambient light passing through the display screen and light emitted by the display screen, to make the first light sensor receive ambient light in a first wavelength band and light emitted by the display screen in the first wavelength band and the second light sensor receive ambient light in a second wavelength band and light emitted by the display screen in the second wavelength band.

In a second aspect, the disclosure further provides an electronic device. The electronic device includes a display screen, a light adjusting assembly, a first light sensor, a second light sensor, and a processor. The light adjusting assembly is disposed at one side of the display screen. The first light sensor is disposed at one side of the light adjusting assembly away from the display screen. The second light sensor is disposed at the side of the light adjusting assembly away from the display screen. The processor is electrically connected with the first light sensor and the second light sensor, respectively. The light adjusting assembly is configured to filter ambient light passing through the display screen and light emitted by the display screen, to make the first light sensor receive ambient light in a first wavelength band and light emitted by the display screen in the first wavelength band and the second light sensor receive ambient light in a second wavelength band and light emitted by the display screen in the second wavelength band. The processor is configured to determine an intensity of the ambient light or a color temperature of the ambient light according to the light received by the first light sensor and the second light sensor.

In a third aspect, the disclosure further provides a control method for an electronic device. The control method is applied to the electronic device of the above and includes the following. An intensity of first light is obtained with the first light sensor, where the first light includes the ambient light in the first wavelength band and the light emitted by the display screen in the first wavelength band. An intensity of second light is obtained with the second light sensor, where the second light includes the ambient light in the second wavelength band and the light emitted by the display screen in the second wavelength band. The intensity of the ambient light or the color temperature of the ambient light is determined according to the intensity of the first light and the intensity of the second light. The electronic device is controlled according to the intensity of the ambient light or the color temperature of the ambient light.

BRIEF DESCRIPTION OF THE DRAWINGS

FIG. 1 is a schematic structural diagram illustrating an electronic device provided in implementations of the disclosure.
FIG. 2 is a first schematic structural diagram illustrating a display apparatus provided in implementations of the disclosure.
FIG. 3 is a first schematic diagram of light-transmission wavelength bands of a first filtering element and a second filtering element in FIG. 2.
FIG. 4 is a second schematic diagram of light-transmission wavelength bands of a first filtering element and a second filtering element in FIG. 2.
FIG. 5 is a third schematic diagram of light-transmission wavelength bands of a first filtering element and a second filtering element in FIG. 2.
FIG. 6 is a first schematic diagram of light propagation in the display apparatus illustrated in FIG. 2.
FIG. 7 is a second schematic diagram of light propagation in the display apparatus illustrated in FIG. 2.
FIG. 8 is a schematic diagram of a first light-transmission wavelength band and a second light-transmission wavelength band illustrated in FIG. 5.

FIG. 9 is a second schematic structural diagram illustrating a display apparatus provided in implementations of the disclosure.

FIG. 10 is a third schematic structural diagram illustrating a display apparatus provided in implementations of the disclosure.

FIG. 11 is a fourth schematic structural diagram illustrating a display apparatus provided in implementations of the disclosure.

FIG. 12 is a first schematic flowchart illustrating a control method for an electronic device provided in implementations of the disclosure.

## DETAILED DESCRIPTION

The technical solution in implementations of the disclosure will be clearly and completely described below in conjunction with drawings 1 to 12 in the implementations of the disclosure. Apparently, the described implementations are only part of rather than all of the implementations of the disclosure. For those skilled in the art, all other implementations obtained without creative effort based on the implementations in the disclosure are within the scope of protection of the disclosure.

Implementations of the disclosure provide an electronic device. The electronic device can be a device such as a smart phone or a tablet computer, or can be a game device, an augmented reality (AR) device, an automobile device, a data storage device, an audio playback device, a video playback device, a notebook computer, a desktop computing device, and the like.

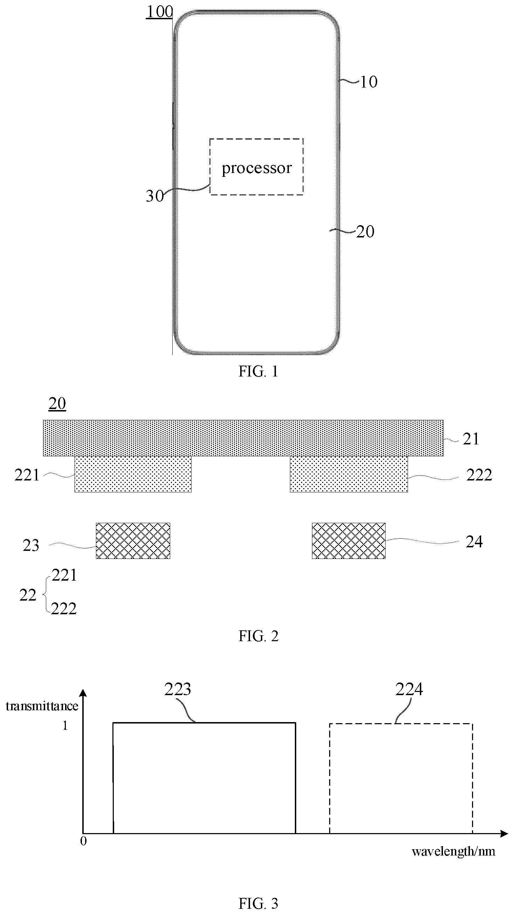

Referring to FIG. 1, FIG. 1 is a schematic structural diagram illustrating an electronic device provided in implementations of the disclosure. The electronic device 100 can include a housing 10, a display apparatus 20, and a processor 30.

The housing 10 is used to form an external contour and an integral frame of the electronic device 100. It is understood that, the housing 10 may be used for mounting various functional modules of the electronic device 100 such as a camera, a circuit board, a battery, and the like.

The display apparatus 20 is mounted on the housing 10. The display apparatus 20 is used for displaying information such as image, text, and the like. In addition, the display apparatus 20 may also include a light sensor for detecting ambient light. As such, the electronic device 100 can automatically control a display brightness, a display color, and the like when the display apparatus 20 displays the information, according to information detected by the light sensor.

The processor 30 is mounted in the housing 10. The processor 30 is electrically connected with the display apparatus 20, so that the processor 30 can control display of the display apparatus 20. In addition, the processor 30 can also process the information detected by the light sensor in the display apparatus 20, for example, analyze and calculate the information detected by the light sensor.

Referring to FIG.2, FIG. 2 is a first schematic structural diagram illustrating a display apparatus provided in implementations of the disclosure. The display apparatus 20 can include a display screen 21, a light adjusting assembly 22, a first light sensor 23, and a second light sensor 24.

The display screen 21 may emit light. When natural light emitted by the display screen 21 is transmitted to the outside of the display apparatus 20 and enters an eye of a user, the user can observe information displayed by the display apparatus 20. It is understood that the display screen 21 may include multiple organic light-emitting diodes (OLED).

The light adjusting assembly 22 is disposed at one side of the display screen 21, for example, the inside of the display screen 21, and disposed between the display screen 21 and the first light sensor 23 as well as the second light sensor 24. The light adjusting assembly 22 is used for filtering ambient light passing through the display screen 21 and light emitted by the display screen 21, so that the first light sensor 23 can receive ambient light in a first wavelength band and light emitted by the display screen 21 in the first wavelength band, and the second light sensor 24 can receive ambient light in a second wavelength band and light emitted by the display screen 21 in the second wavelength band.

It is understood that, the light emitted by the display screen 21 may be natural light. The natural light emitted by the display screen 21 may either be emitted towards the outside of the display apparatus 20 and enter the eye of the user, or may be emitted towards the side where the light adjusting assembly 22 is located and enter inside of the display apparatus 20 and reach the light adjusting assembly 22. In addition, the ambient light is also natural light, and the ambient light outside the display apparatus 20 can pass through the display apparatus 20 to reach the inside of the display apparatus 20.

When the light emitted by the display screen 21 and the external ambient light entering the inside of the display apparatus 20 reach the light adjusting assembly 22, the light adjusting assembly 22 can filter the light, so that the light in the first wavelength band can pass through the light adjusting assembly 22 and then enter the inside of the display apparatus 20 and can be detected by the first light sensor 23, and the light in the second wavelength band can pass through the light adjusting assembly 22 and then enter the inside of the display apparatus 20 and can be detected by the second light sensor 24.

In combination with FIG. 2 and referring to FIG. 3, FIG. 3 is a first schematic diagram of light-transmission wavelength bands of a first filtering element and a second filtering element in FIG. 2. The light adjusting assembly 22 can include a first light filtering element 221 and a second light filtering element 222 apart from the first light filtering element 221. The first light filtering element 221 can be disposed opposite to the first light sensor 23. The second light filtering element 222 can be disposed opposite to the second light sensor 24. The first light filtering element 221 can have a first light-transmission wavelength band 223. The second light filtering element 222 can have a second light-transmission wavelength band 224, where the first light-transmission wavelength band 223 is different from the second light-transmission wavelength band 224.

It can be understood that, the first light-transmission wavelength band 223 refers to a range of a wavelength band of light that can pass through the first light filtering element 221. Under the action of the first light-transmission wavelength band 223, the first light filtering element 221 can select light in a wavelength band (target wavelength band) which has the same range as the first light-transmission wavelength band. As such, the light in the wavelength band which has the same range as the first light-transmission wavelength band can pass through the first light filtering element 221, but light in other wavelength bands cannot pass through the first light filtering element 221.

Similarly, the second light-transmission wavelength band 224 refers to a range of a wavelength band of light that can pass through the second light filtering element 222. Under the action of the second light-transmission wavelength band 224, the second light filtering element 222 can select light in a wavelength band (target wavelength band) which has the same range as the second light-transmission wavelength band. As such, the light in the wavelength band which has the same range as the second light-transmission wavelength band can pass through the second light filtering element 222, but light in other wavelength bands cannot pass through the second light filtering element 222.

For the display apparatus of implementations of the disclosure, in the light emitted by the display screen 21 and the ambient light entering the inside of the display apparatus 20 from the outside, only light in the first wavelength band having the same range as the first light-transmission wavelength band 223 can pass through the first light filtering element 221 but light in other wavelength bands cannot pass through the first light filtering element 221. Similarly, only light in the second wavelength band having the same range as the second light-transmission wavelength band 224 can pass through the second light filtering element 222 but light in other wavelength bands cannot pass through the second light filtering element 222. Since the first light-transmission wavelength band 223 is different from the second light-transmission wavelength band 224, the light passing through the first light filtering element 221 and the light passing through the second light filtering element 222 are different in wavelength band range and number. According to the difference, an intensity of the external ambient light and a color temperature of the external ambient light can be calculated, which can reduce or avoid influence caused by emission of the display screen 21 and improve accuracy of detecting the ambient light.

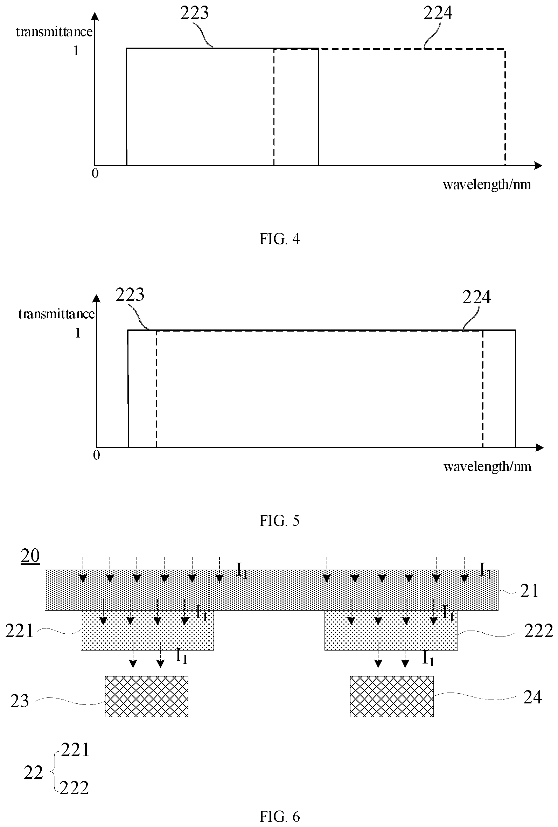

In combination with FIG. 3 and referring to FIG. 4 and FIG. 5, FIG. 4 is a second schematic diagram of light-transmission wavelength bands of a first filtering element and a second filtering element in FIG. 2 and FIG. 5 is a third schematic diagram of light-transmission wavelength bands of a first filtering element and a second filtering element in FIG. 2.

As illustrated in FIG. 3, the first light-transmission wavelength band 223 completely does not overlap with the second light-transmission wavelength band 224 in range, such that the first light-transmission wavelength band 223 is different from the second light-transmission wavelength band 224.

As illustrated in FIG. 4, the first light-transmission wavelength band 223 can overlap in part with the second light-transmission wavelength band 224 in range, such that the first light-transmission wavelength band 223 is different from the second light-transmission wavelength band 224.

As illustrated in FIG. 5, the first light-transmission wavelength band 223 can include or be wider than the second light-transmission wavelength band 224 in range, such that the first light-transmission wavelength band 223 is different from the second light-transmission wavelength band 224.

Alternatively, the second light-transmission wavelength band 224 can include or be wider than the first light-transmission wavelength band 223 in range, such that the first light-transmission wavelength band 223 is different from the second light-transmission wavelength band 224.

It can be understood that, the relationship between the first light-transmission wavelength band 223 and the second light-transmission wavelength band 224 is not specifically limited in implementations of the disclosure. The technical solution in which the first light-transmission wavelength band 223 is different from the second light-transmission wavelength band 224 is within the protection scope of the implementations of the disclosure.

Understandably, because the intensity of light is related to wavelength and photon quantity, light with different wavelengths and photon quantities will lead to different intensities of light. When the first light-transmission wavelength band 223 is different from the second light-transmission wavelength band 224, the intensity of the light passing through the first light filtering element 221 is different from the intensity of the light passing through the second light filtering element 222.

Referring to FIG, 2 again, both the first light sensor 23 and the second light sensor 24 can be disposed at one side of the light adjusting assembly 22 away from the display screen 21. The first light sensor 23 can be spaced apart from the second light sensor 24. Both the first light sensor 23 and the second light sensor 24 can be photoelectric sensors, for converting a received optical signal into a corresponding electrical signal.

Understandably, the first light sensor 23 is disposed opposite to the first light filtering element 221, such that the first light sensor 23 can receive and detect the light emitted by the display screen 21 in the first wavelength band and the external ambient light in the first wavelength band, after such light passing through the first light filtering element 221, where the first wavelength band and the first light-transmission wavelength band 223 have a same range.

Similarly, the second light sensor 24 is disposed opposite to the second light filtering element 222, such that the second light sensor 24 can receive and detect the light emitted by the display screen 21 in the second wavelength band and the external ambient light in the second wavelength band, after passing through the second light filtering element 222, where the second wavelength band and the second light-transmission wavelength band 224 have a same range.

Understandably, as illustrated in FIG. 2, a projection of the first light filtering element 221 on the display screen 21 is larger than a projection of the first light sensor 23 on the display screen 21 in area, such that an area for receiving light by the first light sensor 23 is larger than an area for filtering light by the first light filtering element 221. Similarly, a projection of the second light filtering element 222 on the display screen 21 is larger than a projection of the second light sensor 24 on the display screen 21, such that an area of receiving light by the second light sensor 24 is larger than an area of filtering light by the second light filtering element 222. As such, the first light sensor 23 can fully receive the light passing through the first light filtering element 221 and the second light sensor 24 can fully receive the light passing through the second light filtering element 222.

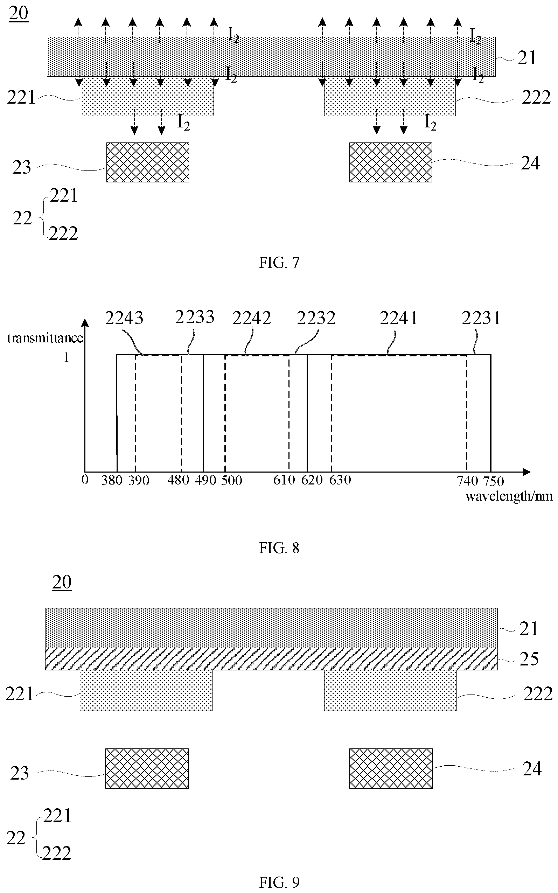

Referring to FIG. 6 and FIG. 7, FIG. 6 is a first schematic diagram of light propagation in the display apparatus illustrated in FIG. 2 and FIG. 7 is a second schematic diagram of light propagation in the display apparatus illustrated in FIG. 2.

As illustrated in FIG. 6, when ambient light $I_1$ is incident inside the display apparatus 2, there is a certain loss due to reflection and absorption of the internal structure of the display screen 21 when passing through the display screen 21. Then, in ambient light $I_1$, light in the first wavelength band having the same range as the first light-transmission wavelength band 223 can continue to pass through the first light filtering element 221 and be received by the first light sensor 23. Meanwhile, in ambient light $I_1$, light in the second wavelength band having the same range as the second light-transmission wavelength band 224 can continue to pass through the second light filtering element 222 and be received by the second light sensor 24.

As illustrated in FIG. 7, a part of light $I_2$ emitted by the display screen 21 travels towards the outside of the display apparatus 20 and is incident on the eye of the user. Another part of light $I_2$ emitted by the display screen 21 travels towards the side where the light adjusting assembly 22 is located. When travelling to the light adjusting assembly 22, light in the first wavelength band having the same range as the first light-transmission wavelength band 223 can continue to pass through the first light filtering element 221 and be received by the first light sensor 23, and light in the second wavelength band having the same range as the second light-transmission wavelength band 224 can continue to pass through the second light filtering element 222 and be received by the second light sensor 24.

Understandably, the first light sensor 23 can receive the ambient light in the first wavelength band having the same range as the first light-transmission wavelength band 223 and in the light emitted by the display screen 21, the light in the first wavelength band having the same range as the first light-transmission wavelength band 223. The second light sensor 24 can receive the ambient light in the second wavelength band having the same range as the second light-transmission wavelength band 224 and in the light emitted by the display screen 21, the light in the second wavelength band having the same range as the second light-transmission wavelength band 224.

Understandably, when receiving the light, the first light sensor 23 and the second light sensor 24 can detect the intensity of the light received. The intensity value of light detected by the first light sensor 23 can be called a first intensity value of light, and the intensity value of light detected by the second light sensor 24 can be called a second intensity value of light, where the intensity value of light represents brightness of the light.

Understandably, the first intensity value of light is a sum of the intensity value of the ambient light in the first wavelength band having the same range as the first light-transmission wavelength band 223, in the ambient light and the intensity value of the light emitted by the display screen 21 in the first wavelength band having the same range as the first light-transmission wavelength band 223, in the light emitted by the display screen 21. The second intensity value of light is a sum of the intensity value of the ambient light in the second wavelength band having the same range as the second light-transmission wavelength band 224, in the ambient light and the intensity value of the light emitted by the display screen 21 in the second wavelength band having the same range as the second light-transmission wavelength band 224, in the light emitted by the display screen 21.

The processor 30 in the electronic device 100 can be electrically connected with the first light sensor 23 and the second light sensor 24, to process data received by the first light sensor 23 and the second light sensor 24.

The processor 30 can determine the intensity of the ambient light according to the first intensity value of light detected by the first light sensor 23 and the second intensity value of light detected by the second light sensor 24. For example, the processor 30 can calculate the intensity of the ambient light according to weights of the first intensity value of light and the second intensity value of light under different scenes. For another example, in combination with light intensity parameters stored in advance in the electronic device 100, the intensity of the ambient light can be determined according to the light intensity parameters, the first intensity value of light, the second intensity value of light, and the corresponding calculation formula.

For example, the processor 30 can determine the intensity of the ambient light according to the following formula:

$$Q = kn(\frac{Y - mX}{n - m})$$

where the light intensity parameters include $m$, $n$, and $k$. $Q$ represents the intensity of the ambient light; $Y$ represents the intensity value of the light received by the first light sensor 23, i.e., the first intensity value of light detected by the first light sensor 23; $X$ represents the intensity value of the light received by the second light sensor 24, i.e., the second intensity value of light detected by the second light sensor 24; $m$ represents a ratio of an intensity of light emitted by the display screen 21 detected by the first light sensor 23 to an intensity of light emitted by the display screen 21 detected by the second light sensor 24, in absence of ambient light; $n$ represents a ratio of an intensity of ambient light detected by the first light sensor 23 to an intensity of ambient light detected by the second light sensor 24, in absence of light emitted by the display screen 21; and $k$ represents a ratio of the intensity of ambient light detected by the first light sensor 23 to an intensity of ambient light outside the electronic device 100, in absence of light emitted by the display screen 21.

Understandably, the above formula and the light intensity parameters $m$, $n$, and $k$ can be pre-stored in the electronic device 100, for example, in a memory in the electronic device 100. The memory can be electrically connected with the processor 30. The processor 30 can be used to invoke the formula and the light intensity parameters in the memory and calculate the intensity of the ambient light in combination with the first intensity value of light and the second intensity value of light.

For the electronic device 100 of implementations of the disclosure, the processor 30 can determine the intensity of the ambient light according to the above formula and in combination with the first intensity value of light detected by the first light sensor 23 and the second intensity value of light detected by the second light sensor 24. On one hand, the above formula is simple, which reduce calculation amount of the processor 30. On the other hand, the processor 30 simply needs to control two light sensors to perform light detection, but does not need to perform operations such as reducing noise and eliminating light leakage of screen through complex comparative analysis of screen shots in related technology. According to the solutions of the implementations of the disclosure, the working load of the processor 30 can be greatly reduced, which will not cause lag of the electronic device 100, suitable for scenarios in high refresh rates.

The processor 30 can determine the color temperature of the ambient light according to the first intensity value of light detected by the first light sensor 23 and the second intensity value of light detected by the second light sensor 24. Understandably, the color temperature of light indicates the temperature of light color. Light in the same wavelength band of different intensity values will present different color temperatures in senses. For example, when the intensity of natural light is insufficient, it will produce a cold atmosphere, and its color temperature is lower and its color is prone to be yellow. When the intensity of natural light is too high, it will produce a warm atmosphere, and its color temperature is higher and its color is prone to be cyan.

For example, the processor 30 can draw a spectrogram of the ambient light according to the intensity value of the ambient light, and the color temperature value of the ambient light can be determined according to the spectrogram.

For example, the processor 30 can also calculate the color temperature value of the ambient light according to a color temperature-light intensity calculation formula. For example, the processor can calculate the color temperature value of the ambient light according to following formula:

$$CCT = ax + b$$

where CCT represents the color temperature of the ambient light, a represents a color temperature coefficient, which is a fixed value, b represents a color temperature compensation value, which is also a fixed value, and x represents the intensity of the ambient light. a and b can be pre-stored in the memory of the electronic device 100, the processor 30 can calculate the color temperature value of the ambient light according to the formula and in combination with the first intensity value of light and the second intensity value of light.

It should be noted that, understandably, in the description of the disclosure, terms such as "first" and "second" are used only to distinguish similar objects and are not understood to indicate or imply relative importance or to imply the number of technical features indicated.

In the display apparatus 20 of implementations of the disclosure, since the first light-transmission wavelength band 223 of the first light filtering element 221 is different from the second light-transmission wavelength band 224 of the second light filtering element 222, in the light emitted by the display screen 21 and the ambient light entering the inside of the display apparatus 20 from the outside, light that can pass through the first light filtering element 221 and the second light filtering element 222 are different in wavelength band and quantity. As such, the wavelength band and quantity of the light finally detected by the first light sensor 23 is different from the wavelength band and quantity of the light finally detected by the second light sensor 24. According to the difference, the intensity and the color temperature of the external ambient light can be calculated. On one hand, it is possible to reduce or avoid the influence caused by luminescence of the display screen 21, that is, the influence caused by self-luminescence of the display apparatus 20, so that the intensity of the ambient light and the color temperature of the ambient light can be more accurately detected, improving accuracy of detection of the ambient light. On the other hand, the intensity of the ambient light and the color temperature of the ambient light can be determined through simple calculation, in other words, the calculation can be simple, which can reduce the computation at the software side.

Referring to FIG. 8, FIG. 8 is a schematic diagram of a first light-transmission wavelength band and a second light-transmission wavelength band illustrated in FIG. 5.

The first light-transmission wavelength band 223 can include a first sub-wavelength band 2231, a second sub-wavelength band 2232, and a third sub-wavelength band 2233. The second light-transmission wavelength band 224 can include a fourth sub-wavelength band 2241, a fifth sub-wavelength band 2242, and a sixth sub-wavelength band 2243.

The first sub-wavelength band 2231 and the fourth sub-wavelength band 2241 can be a part of a first wavelength band, for example, a part of red light wavelength band (R wavelength band). The second sub-wavelength band 2232 and the fifth sub-wavelength band 2242 can be a part of a second wavelength band, for example, a part of green light wavelength band (G wavelength band). The third sub-wavelength band 2233 and the sixth sub-wavelength band 2243 can be a part of a third wavelength band, for example, a part of blue light wavelength band (B wavelength band).

Accordingly, the first light sensor 23 and the second light sensor 24 each can at least set a first channel (for example, R channel), a second channel (for example, G channel), and a third channel (for example, B channel). The first channel on each of the first light sensor 23 and the second light sensor 24 can detect light intensity information of the first wavelength band such as red light wavelength band (R wavelength band). The second channel on each of the first light sensor 23 and second light sensor 24 can detect light intensity information of the second wavelength band such as green light wavelength band (G wavelength band). The third channel on each of the first light sensor 23 and the second light sensor 24 can detect light intensity signal of the third wavelength band such as blue light wavelength band (B wavelength band).

When the ambient light and the light emitted by the display screen 21 are passing through the light adjusting assembly 22, light in the first sub-wavelength band 2231 in the first wavelength band (for example, red light wavelength band) can pass through the first light filtering element 221 and be received and detected by the first channel of the first light sensor 23, and light in the fourth sub-wavelength band 2241 in the first wavelength band (for example, red light wavelength band) can pass through the second light filtering element 222 and be received and detected by the first channel of the second light sensor 24.

When the ambient light and the light emitted by the display screen 21 are passing through the light adjusting assembly 22, light in the second sub-wavelength band 2232 in the second wavelength band (for example, green light wavelength band) can pass through the first light filtering element 221 and be received and detected by the second channel of the first light sensor 23, and light in the fifth sub-wavelength band 2242 in the second wavelength band (for example, green light wavelength band) can pass through the second light filtering element 222 and be received and detected by the second channel of the second light sensor 24.

When the ambient light and the light emitted by the display screen 21 are passing through the light adjusting assembly 22, light in the third sub-wavelength band 2233 in the third wavelength band (for example, blue light wavelength band) can pass through the first light filtering element 221 and be received and detected by the third channel of the first light sensor 23, and light in the sixth sub-wavelength band 2243 in the third wavelength band (for example, blue light wavelength band) can pass through the second light filtering element 222 and be received and detected by the third channel of the second light sensor 24.

In this case, the three channels of the first light sensor 23 can correspond to the first sub-wavelength band to the third sub-wavelength band 2233, and the three channel of the second light sensor 24 correspond to the fourth sub-wavelength band to the sixth sub-wavelength band.

In the display apparatus 20 of implementations of the disclosure, the light adjusting assembly 22 can make light in the specific target wavelength bands in each of the first wavelength band, the second wavelength band, the third wavelength band (for example, red light wavelength band, green light wavelength band, and blue light wavelength band) to pass through, the first light sensor 23 and the second light sensor 24 can respectively detect intensities of light in the first wavelength band, the second wavelength band, and the third wavelength band (for example, red light wavelength band, green light wavelength band, and blue light wavelength band), and the color temperatures of light of different colors in the ambient light can be calculated according to intensity values of light in three different wavelength bands, improving accuracy of detection of the color temperature of the ambient light.

The first sub-wavelength band 2231, the second sub-wavelength band 2232, and the third sub-wavelength band 2233 can be spaced apart and non-overlapping, and the fourth sub-wavelength band 2241, the fifth sub-wavelength band 2242, and the sixth sub-wavelength band 2243 can also be spaced apart and non-overlapping.

For example, as illustrated in FIG.8, the first sub-wavelength band 2231 can be from 620nm to 750nm, the second sub-wavelength band 2232 can be from 490nm to 620nm, the third sub-wavelength band 2233 can be from 380nm to 490nm, such that the first sub-wavelength band 2231, the second sub-wavelength band 2232, and the third sub-wavelength band 2233 are spaced apart and non-overlapping. The fourth sub-wavelength band 2241 can be from 630nm to 740nm, the fifth sub-wavelength band 2242 can be from 500nm to 610nm, the third sub-wavelength band 2233 can be from 390nm to 480nm, such that the fourth sub-wavelength band 2241, the fifth sub-wavelength band 2242, and the sixth sub-wavelength band 2243 are spaced apart and non-overlapping.

In implementations of the disclosure, the first sub-wavelength band, the second sub-wavelength band, and the third sub-wavelength band are spaced apart, and the fourth sub-wavelength band, the fifth sub-wavelength band, and the sixth sub-wavelength band are spaced apart, such that wavelength bands of different colors are non-overlapping. As such, intensities of light in wavelength bands of different colors can be accurately detected through the three channels of the first light sensor 23 and the three channels of the second light sensor 24, thereby improving detection of color temperatures of light of different colors.

The first light sensor 23 and the second light sensor 24 each can have a fourth channel (C channel), where the fourth channel can detect light intensity information of all wavelength bands. That is, the fourth channel of the first light sensor 23 can detect the intensity of all light that can pass through the first light filtering element 221 of the light adjusting assembly 22, and the fourth channel of the second light sensor 24 can detect the intensity of all light that can pass through the second light filtering element 222 of the light adjusting assembly 22.

Understandably, if only the intensity value of the ambient light is required to be detected, the processor 30 can perform calculation according to the first intensity value of light obtained through the fourth channel of the first light sensor 23 and the second intensity value of light obtained through the fourth channel of the second light sensor 24.

Understandably, if both the intensity value of the ambient light and the color temperature value of the ambient light are detected, the processor 30 can calculate the intensity value and the color temperature value of the ambient light according to intensity values of light of different colors detected through the first channel, the second channel, and the third channel of the first light sensor 23 as well as intensity values of light of different colors detected through the first channel, the second channel, and the third channel of the second light sensor 24. In this case, the processor 30 can use the intensity value of light obtained through the fourth channel of the first light sensor 23 and the intensity value of light obtained through the fourth channel of the second light sensor 24 as comparison and reference, to assist in modifying the intensity value and the color temperature of the ambient light. Therefore, for the display apparatus 20 of implementations of the disclosure, the intensity value and the color temperature of the ambient light can be accurately detected.

As illustrate in FIG. 5 and FIG. 8, the first light-transmission wavelength band 223 of the first light filtering element 221 of the light adjusting assembly 22 is wider than the second light-transmission wavelength band 224 of the second light filtering element 222 of the light adjusting assembly 22, and the first light-transmission wavelength band 223 can include the second light-transmission wavelength band 224.

The visible light has its fixed wavelength band range on the spectrogram, and the first light-transmission wavelength band 223 is wider than the second light-transmission wavelength band 224 and the first light-transmission wavelength band 223 include the second light-transmission wavelength band 224. On one hand, the first light-transmission wavelength band 223 and the second light-transmission wavelength band 224 are different, and accordingly intensity values of light detected by the first light sensor 23 and the second light sensor 24 are different, and thus the intensity of the ambient light can be calculated. On the other hand, the first light-transmission wavelength band 223 and the second light-transmission wavelength band 224 can be larger spectral ranges of visible light, to ensure that more light can reach the first light sensor 23 and the second light sensor 24, facilitating detection of the first light sensor 23 and the second light sensor 24.

Furthermore, the red light wavelength band, the green light wavelength band, and the blue light wavelength band each have their fixed wavelength band ranges on the spectrogram of visible light. Thus, the wavelength band of each color in the first light-transmission wavelength band 223 can be wider than or include the wavelength band of each color in the second light-transmission wavelength band 224. For example, as illustrated in FIG. 8, the first sub-wavelength band 2231 in the first light-transmission wavelength band 223 can be wider than or include the fourth sub-wavelength band 2241 in second light-transmission wavelength band 224. The second sub-wavelength band 2232 in the first light-transmission wavelength band 223 can be wider than or include the fifth sub-wavelength band 2242 in the second light-transmission wavelength band 224. The third sub-wavelength band 2233 in the first light-transmission wavelength band 223 can be wider than or include the sixth sub-wavelength band 2243 in the second light-transmission wavelength band 224.

Understandably, a transmittance of the first light filtering element 221 of the light adjusting assembly 22 to light in the first light-transmission wavelength band 223 can be 1 or approximately 1, and a transmittance of the second light filtering element 222 of the light adjusting assembly 22 to light in the second light-transmission wavelength band 224 can be 1 or approximately 1. In this case, when light in a wavelength band having the same range as the first light-transmission wavelength band 223 is passing through the first light filtering element 221, there is substantially no reflection and refraction, and there is no light loss. When light in a wavelength band having the same range as the second light-transmission wavelength band 224 is passing through the second light filtering element 222, there is substantially no reflection and refraction, and there is no light loss. As such, more light can arrive at the first light sensor 23 and the second light sensor 24, further ensuring detection accuracy of the first light sensor 23 and the second light sensor 24.

Understandably, as illustrated in FIG. 2, the first light filtering element 221 and the second light filtering element 222 of the light adjusting assembly 22 can be two filtering elements spaced apart. The first light filtering element 221 and the second light filtering element 222 of the light adjusting assembly 22 can also be two regions on a layered structure.

Understandably, the first light filtering element 221 and the second light filtering element 222 of the light adjusting assembly 22 can be a whole layered structure. For example, by adjusting the thickness and material of the coating film, the transmittance of the region of the light adjusting assembly module 22 except the first filtering element 221 and the second filtering element 222 is zero, so that the light reaching the light adjusting assembly module 22 can only pass through the first filtering element 221 and the second filtering element 222 but cannot pass through other regions, thereby ensuring the detection accuracy of the first light sensor 23 and the second light sensor 24. Further, the display apparatus 20 can be made to have a stable layered structure.

It is noted that, the above is only examples of the light adjusting assembly 22 of implementations of the disclosure, the light adjusting assembly 22 of implementations of the disclosure can further include other components. For example, a polarizer and a wave plate are disposed between the first light filtering element and the second light filtering element and the light adjusting assembly 22. For another example, a condensing sheet is disposed between the first light filtering element and the second light filtering element and the light adjusting assembly 22. The structure of the light adjusting assembly 22 is not limited in implementations of the disclosure. The structure of the light adjusting assembly 22 with which the first light sensor 23 can receive the ambient in the first wavelength band and the light emitted by the display screen in the first wavelength band and the second light sensor 24 can receive the ambient light in the second wavelength band and the light emitted by the display screen in the second wavelength band falls in the protection scope of implementations of the disclosure.

To further improve the detection accuracy of the first light sensor 23 and the second light sensor 24, referring to FIG. 9, FIG. 9 is a second schematic structural diagram illustrating a display apparatus provided in implementations of the disclosure. The display apparatus 20 of implementations of the disclosure can further include a light diffusing element 25. The light diffusing element 25 can be disclosed between the display screen 21 and the light adjusting assembly 22. The light diffusing element 25 can be disposed opposite to the first light sensor 23 and the second light sensor 24. In this case, the display screen 21, the light diffusing element 25, and the light adjusting assembly 22 are sequentially stacked.

The light diffusing element 25 can be used to cause the light to refract, reflect, and scatter, to diffuse and mix the light uniformly. When the display screen displays information, at the same time, OLEDs arranged on the display screen 21 does not always turn on or off simultaneously, which makes total amounts of light emitted by OLEDs in different regions of the display screen 21 different.

If a total amount of light emitted by OLEDs in the display screen 21 corresponding to the first light sensor 23 and a total amount of light emitted by OLEDs in the display screen 21 corresponding to the second light sensor 24 are different, the first intensity value of light detected by the first light sensor 23 and the second intensity value of light detected by the second light sensor 24 introduce an error factor of different total amounts of light emitted by OLEDs in the display screen 21. As a result, the intensity value of the ambient light calculated according to the first intensity value of light and the second intensity value of light occurs an error.

In the display apparatus 20 of implementations of the disclosure, the light diffusing element 25 is disposed between the display screen 21 and the light adjusting assembly 22. The light diffusing element 25 can uniformly mix the light emitted by the display screen 21 and the ambient light, so that light reaching the first light filtering element 221 and the second light filtering element 222 of the light adjusting assembly 22 has a similar wavelength band and amount. As such, the error factor of different total amounts of light emitted by OLEDs in different regions of the display screen 21 can be alleviated, and the detection accuracy of the first light sensor 23 and the second light sensor 24 can be improved.

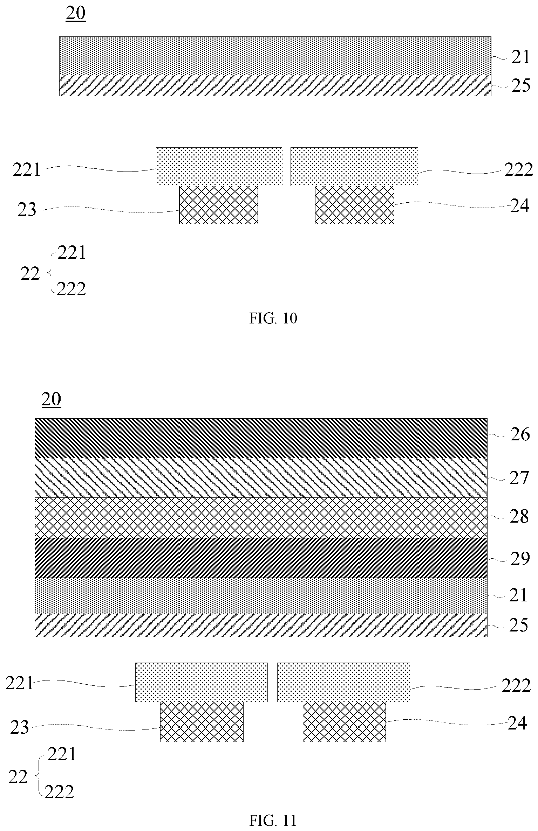

To further improve the detection accuracy of the first light sensor 23 and the second light sensor 24, referring to FIG. 10, FIG. 10 is a third schematic structural diagram illustrating a display apparatus provided in implementations of the disclosure. In implementations of the disclosure, the relative positional relationship between the first light filtering element 221 and second light filtering element 222 of the light adjusting assembly 22, the first light sensor 23, the second light sensor 24, and the display screen 21 can be adjusted, to reduce the error factor of different total amounts of light emitted by OLEDs in different regions of the display screen 21.

As illustrated in FIG. 10, the first light filtering element 221 and the second light filtering element 222 of the light adjusting assembly 22 can be as close as possible, and the first light sensor 23 and the second light sensor 24 can be as close as possible. Since a distance between the first light filtering element 221 and the second light filtering element 222 is small and a distance between the first light sensor 23 and the second light sensor 24 is small, regions in the display screen 21 corresponding to them are close. Total amounts of light emitted by OLEDs on the close regions in the display screen 21 are similar, such that a total amount of light reaching the first light filtering element 221 of the light adjusting assembly 22 and a total amount of light reaching the second light filtering element 222 of the light adjusting assembly 22 are similar, which can reduce the error factor of different total amounts of light emitted by OLEDs in different regions of the display screen 21.

Understandably, in theory, the distance between the first light filtering element 221 and the second light filtering element 222 of the light adjusting assembly 22 and the distance between the first light sensor 23 and the second light sensor 24 can be zero. In practical production, for assembly, the first light filtering element 221 and the second light filtering element 222 can be spaced apart by about 0.3mm and the first light sensor 23 and the second light sensor 24 can be spaced apart by about 0.3mm.

As illustrated in FIG. 10, it is also possible to increase a distance between the display screen 21 and the light adjusting assembly 22, the first light sensor 23, as well as the second light sensor 24, to reduce the error factor of different total amounts of light emitted by OLEDs in different regions of the display screen 21.

Since the display screen 21 is self-luminous, the light emitted by the display screen has a certain scattering angle. When the distance between the display screen 21 and the light adjusting assembly 22, the first light sensor 23, as well as the second light sensor 24 is increased, the light emitted by the display screen 21 can be mixed uniformly when reaching the light filter. As such, light reaching the first light filtering element 221 and the second light filtering element 222 of the light adjusting assembly 22 has a similar wavelength band and amount, which can improve the detection accuracy of the first light sensor 23 and the second light sensor 24.

In addition to the above structure, referring to FIG. 11, FIG. 11 is a fourth schematic structural diagram illustrating a display apparatus provided in implementations of the disclosure. The display apparatus 20 of implementations of the disclosure can further include a cover plate 26, a touch circuit 27, a polarizing element 28, and a quarter wave plate 29.

The polarizing element 28, the quarter wave plate 29, and the display screen 21 are sequentially stacked. The polarizing element 28 can be disposed at one side of the display screen 21 away from the light adjusting assembly 22. The side where the polarizing element 28 is located is the side of the display apparatus 20 facing the user when the display apparatus 20 displays information. That is, the side where the polarizing element 28 is located is a light emitting side of the display apparatus 20 when the display apparatus 20 displays information. Understandably, the side where the polarizing element 28 is located is an incident side of the ambient light. That is, the ambient light is incident into the display apparatus 20 from the side where the polarizing element 28 is located.

When natural light emitted by the display screen 21 is transmitted to the polarizing element 28, the polarizing element 28 polarizes the natural light into linearly polarized light. Thus, the user can normally observe the information displayed by the display apparatus 20. When the ambient light is incident from the polarizing element 28 into the display apparatus 20, the polarizing element 28 can further polarize the ambient light into linearly polarized light. Thus, the ambient light incident into the display apparatus 20 is linearly polarized light.

Understandably, the polarizing element 28 has a polarizing axis. The direction of the polarizing axis of the polarizing element 28 is same as the direction of light that can pass through the polarizing element 28. That is, in the natural light, a portion parallel to the polarizing axis of the polarizing element 28 can pass through the polarizing element 28, while a portion perpendicular to the polarizing axis of the polarizing element 28 cannot pass through the polarizing element 28.

The quarter wave plate 29 is disposed between the polarizing element 28 and the display screen 21. When perpendicular incident light (normal light) passes through the quarter wave plate 29, the phase difference between ordinary light (O light) and the extraordinary light (E light) in exiting light of the perpendicular incident light is 1/4 $\lambda$ wavelength. In the optical path, the quarter wave plate 29 can change linearly polarized light into circularly polarized light or elliptically polarized light, vice versa. The quarter wave plate 29 can retard the phase of the light. The quarter wave plate 29, cooperated with the polarizing element 28, can change the propagation path of light.

When the ambient light is incident into the display apparatus 20, a portion of the ambient light having an incident direction different from the direction of the polarizing axis of the polarizing element 28 is blocked by the polarizing element 28, another part of the ambient light having an incident direction the same as the direction of the polarizing axis of the polarizing element 28 passes through the polarizing element and becomes linearly polarized light. Then, the linearly polarized light becomes circularly polarized light after passing through the quarter-wave plate 29. After reflected by a metal electrode (especially a metal cathode) in the display screen 21, a rotation direction of the circularly polarized light is changed by 90 degrees. The reflected light cannot pass through the polarizing element 28 again. As such, the polarizing element 28 and the quarter-wave plate 29 cooperate with each other to solve the reflection of the ambient light.

The touch circuit 27 can be disposed at one side of the polarizing element 28 away from the display screen 21. That is, the touch circuit 27 is disposed the side of the display apparatus 20 facing the user. The touch circuit 27 can be electrically connected with the display screen 21, and the touch circuit 27 can receive a touch operation on the display screen 21, to achieve touch control of the user on the electronic device 100.

The cover plate 26 can be disposed at one side of the touch circuit 27 away from the polarizing element 28. In this case, the cover plate 26, the touch circuit 27, the polarizing element 28, the quarter wave plate 29, and the display screen 21 can be sequentially stacked. The cover plate 26 can be disposed at the outermost side of the display apparatus 20 facing the user. The cover plate 26 can protect the display apparatus 20 from scratching.

Understandably, the cover plate 26 can be a transparent glass cover plate 26, so that the cover plate 26 does not affect observation of the user on contents displayed by the display apparatus 20.

In the production process of the display apparatus 20, the light diffusing element 25 is first attached to an inner side of the display screen 21, to make the display screen 21 and the light diffusing element 25 form a combination. Then, the display screen 21, the quarter wave plate 29, the polarizing element 28, the touch circuit 27, and the cover plate 26 are sequentially stacked. Next, the first light filtering element 221 can be directly attached to a sensing surface of the first light sensor 23 and the second light filtering element 222 of the light adjusting assembly can be directly attached to a sensing surface of the second light sensor 24, such that the first light filtering element 221 can face the first light sensor 23 and the second light filtering element 222 can face the second light sensor 24. Finally, a spacing between the combination formed by the first light sensor 23 and the first light filtering element 221 and display screen 21 is adjusted, a spacing between the combination formed by the second light sensor 24 and the second light filtering element 222 and the display screen 21 is adjusted, and a spacing between the combination formed by the first light sensor 23 and the first light filtering element 221 and the combination formed by the second light sensor 24 and the second light filtering element 222 is adjusted. As such, assembly of the display apparatus 20 can be achieved.

Based on the structure of the above display apparatus 20, implementations of the disclosure further provide a control method for an electronic device. The control method for the electronic device can be applied to the electronic device 100 of any of the above implementations.

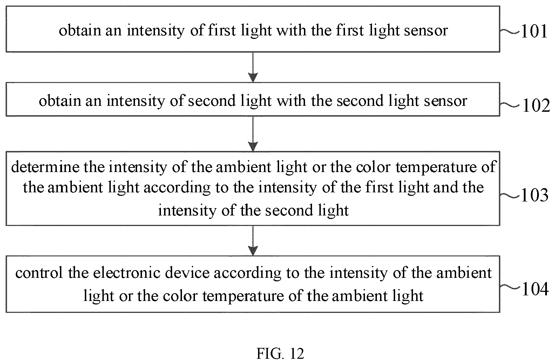

Referring to FIG. 12, FIG. 12 is a first schematic flowchart illustrating a control method for an electronic device provided in implementations of the disclosure. The control method for the electronic device 100 can be applied to the electronic device 100. The electronic device 100 includes a processor 30, a display screen 21, a light adjusting assembly 22 disposed at one side of the display screen 21, and a first light sensor 23 and a second light sensor 24 disposed at one side of the light adjusting assembly 22 away from the display screen 21. The light adjusting assembly 22 is configured to filter ambient light passing through the display screen 21 and light emitted by the display screen 21, such that ambient light in a first wavelength band and light emitted by the display screen 21 in the first wavelength band are received by the first light sensor 23, and ambient light in a second wavelength band and light emitted by the display screen 21 in the second wavelength band are received by the second light sensor 24. The processor 30 is electrically connected with the first light sensor 23 and the second light sensor 24, respectively and the processor 30 is configured to determine an intensity of the ambient light or a color temperature of the ambient light according to the light received by the first light sensor 23 and the second light sensor 24. The control method for the electronic device includes the following.

101, an intensity of first light is obtained with the first light sensor, where the first light includes the ambient light in the first wavelength band and the light emitted by the display screen in the first wavelength band.

102, an intensity of second light is obtained with the second light sensor, where the second light includes the ambient light in the second wavelength band and the light emitted by the display screen in the second wavelength band.

103, the intensity of the ambient light or the color temperature of the ambient light is determined according to the intensity of the first light and the intensity of the second light.

104, the electronic device is controlled according to the intensity of the ambient light or the color temperature of the ambient light.

The electronic device 100 can obtain the intensity value of the first light detected by the first light sensor 23 and the intensity value of the second light detected by the second light sensor 24. Then, the electronic device 100 determine the intensity of the ambient light or the color temperature of the ambient light according to the intensity value of the first light and the intensity value of the second light.

For example, the intensity of the ambient light is determined according to the intensity of the first light and the intensity of the second light as follows. The intensity of the ambient light is determined according to the following formula.

$$Q = kn\left(\frac{Y - mX}{n - m}\right)$$

The memory of the electronic device 100 can pre-store light intensity parameters *m, n,* and *k.* In the above formula, *Q* represents the intensity of the ambient light; *Y* represents the intensity value of the first light received by the first light sensor 23, i.e., the first intensity value of light detected by the first light sensor 23; *X* represents the intensity value of the second light received by the second light sensor 24, i.e., the second intensity value of light detected by the second light sensor 24; *m* represents a ratio of an intensity of light emitted by the display screen 21 detected by the first light sensor 23 to an intensity of light emitted by the display screen 21 detected by the second light sensor 24, in absence of ambient light; *n* represents a ratio of an intensity of ambient light detected by the first light sensor 23 to an intensity of ambient light detected by the second light sensor 24, in absence of light emitted by the display screen 21; and *k* represents a ratio of the intensity of ambient light detected by the first light sensor 23 to an intensity of ambient light outside the electronic device 100, in absence of light emitted by the display screen 21. Further, according to the above formula, in combination with the intensity of the first light and the intensity of the second light as well as the light intensity parameters *m, n,* and *k,* the intensity of the ambient light can be determined.

Based on the above formula, the control method for the electronic device further includes the following.

A calibration coefficient *m* of screen light leakage is obtained. The ambient light is turned off (for example, the electronic device 100 is put in the darkroom) to make the electronic device 100 in an environment without ambient light. The display screen 21 is controlled to emit light and display light in a target wavelength band. The intensity value $P_1$ of the light emitted by the display screen 21 detected by the first light sensor 23 and the intensity value $P_2$ of the light emitted by the display screen 21 detected by the second light sensor 24 are obtained. A ratio $P_1/P_2$ of $P_1$ to $P_2$ is determined as the light intensity parameter *m* in the above formula. Understandably, the light in the target band can be white light. For example, a RGB color scale map of the display interface of the display screen 21 may be adjusted to (255, 255, 255).

A calibration coefficient *n* of ambient light is obtained. The display apparatus 20 is turned off, so that the display screen 21 does not emit light. The electronic device 100 is in an environment without light emitted by the display screen 21. The ambient light is incident into the display apparatus 20 and is then received by the first light sensor 23 and the second light sensor 24. The intensity value $H_1$ of the ambient light detected by the first light sensor 23 and the intensity value Hz of the ambient light detected by the second light sensor 24 are obtained. A ratio $H_1/H_2$ of $H_1$ to $H_2$ is determined as the light intensity parameter *n* in the above formula.

A calibration coefficient *k* of ambient light intensity is obtained. The intensity value $Q_0$ of real ambient light outside the electronic device 100 in the environment without light emitted by the display screen 21 in the previous step is read with an illuminometer. A ratio of $Q_0$ to $H_1$ is determined as the light intensity parameter *k* in the above formula.

Based on this, according to the above control method for the electronic device, values of the light intensity parameters *m, n,* and *k* can be determined. The electronic device 100 can pre-store the values of the light intensity parameters *m, n,* and *k* in the memory of the electronic device 100. When ambient light is detected, the intensity of the ambient light can be determined according to the first intensity value of light, the second intensity value of light, and the light intensity parameters.

After the intensity of the ambient light is determined, the electronic device 100 can be controlled according to the intensity of the ambient light. For example, a display brightness, display color, and the like of the electronic device 100 is controlled. A display mode of the electronic device 100 can also be controlled, for example, the electronic device 100 is controlled to be switched between a daytime display mode and a nighttime display mode according to the intensity of the ambient light.

For example, the electronic device is controlled according to the intensity of the ambient light as follows. A brightness of the electronic device is controlled to be adjusted according to the intensity of the ambient light.

For example, when the intensity of the ambient light is greater than a preset ambient intensity threshold, the intensity of the ambient light is too strong. When the user watches the screen of the electronic device 100 in this environment, eyes of the user may be harmed and the user will feel uncomfortable, so it is necessary to properly reduce the display brightness. When the intensity of the ambient light is less than the preset ambient intensity threshold, the intensity of the ambient light is too weak, that is, the brightness of the external environment is dark. When the user watches the screen of the electronic device 100 in this environment, there is a need to improve the display brightness. Therefore, the electronic device can be controlled to adjust the brightness of the display screen according to the intensity of the ambient light.

The first light-transmission wavelength band 223 of the first light filtering element 221 of the light adjusting assembly 22 can include the first sub-wavelength band 2231, the second sub-wavelength band 2232, and the third sub-wavelength band 2233. The second light-transmission wavelength band 224 of the second light filtering element 222 of the light adjusting assembly 22 can include the fourth sub-wavelength band 2241, the fifth sub-wavelength band 2242, and the sixth sub-wavelength band 2243. Accordingly, the first light sensor 23 and the second light sensor 24 can be provided with at least a first channel (for example, R channel), a second channel (for example, a G channel), and a third channel (for example, B channel).

The first sub-wavelength band 2231 and the fourth sub-wavelength band 2241 can be a part of the first wavelength band, for example, a part of red light wavelength band (R wavelength band). The second sub-wavelength band 2232 and the fifth sub-wavelength band 2242 can be a part of the second wavelength band, for example, a part of green light wavelength band (G wavelength band). The third sub-wavelength band 2233 and the sixth sub-wavelength band 2243 can be a part of the third wavelength band, for example, a part of blue light wavelength band (B wavelength band).

Accordingly, the light intensity parameters prestored in the memory of the electronic device 100 can further include a first calibration parameter, a second calibration parameter, and a third calibration parameter. The first calibration parameter can calibrate the light in the first wavelength band, the second calibration parameter can calibrate the light in the second wavelength band, and the third calibration parameter can calibrate the light in the third wavelength band.

Based on this, the control method for the electronic device in implementations of the disclosure can further include the following.

The intensity value of light in the first sub-wavelength band, the intensity value of light in the second sub-wavelength band, and the intensity value of light in the third sub-wavelength band which are detected by the first light sensor 23 are obtained.

The intensity value of light in the fourth sub-wavelength band, the intensity value of light in the fifth sub-wavelength band, and the intensity value of light in the sixth sub-wavelength band which are detected by the second light sensor are obtained.

According to the intensity value of light in the first sub-wavelength band, the intensity value of light in the second sub-wavelength band, the intensity value of light in the third sub-wavelength band, the intensity value of light in the fourth sub-wavelength band, the intensity value of light in the fifth sub-wavelength band, the intensity value of light in the sixth sub-wavelength band, the first calibration parameter, the second calibration parameter, and the third calibration parameter, the intensity of the ambient light is determined.

According to the intensity value of light in the first sub-wavelength band, the intensity value of light in the fourth sub-wavelength band, and the first calibration parameter, the intensity value of the ambient light in the first wavelength band can be determined. According to the intensity value of light in the second sub-wavelength band, the intensity value of light in the fifth sub-wavelength band, and the second calibration parameter, the intensity value of the ambient light in the second wavelength band can be determined. According to the intensity value of light in the third sub-wavelength band, the intensity value of light in the sixth sub-wavelength band, and the third calibration parameter, the intensity value of the ambient light in the third wavelength band can be determined. Finally, according to the intensity value of the ambient light in the first wavelength band, the intensity value of the ambient light in the second wavelength band, and the intensity value of the ambient light in the third wavelength band, the intensity value of the ambient light can be determined.

For example, the intensity value of the ambient light in the first wavelength band can be calculated according to the following formula:

$$ Q_1 = k_1 n_1 \frac{Y_1 - m_1 X_1}{n_1 - m_1} $$

where the first calibration parameter includes $m_1$, $n_1$, and $k_1$. $Y_1$ represents the intensity value of light in the first sub-wavelength band detected by the first channel of the first light sensor 23, $X_1$ represents the intensity value of light in the fourth sub-wavelength band detected by the first channel of the second light sensor 24, $m_1$ represents a ratio of an intensity of light emitted by the display screen 21 in the first wavelength band detected by the first channel of the first light sensor 23 to an intensity of light emitted by the display screen 21 in the first wavelength band detected by the first channel of the second light sensor 24, in absence of ambient light, $n_1$ represents a ratio of an intensity of ambient light in the first wavelength band detected by the first channel of the first light sensor 23 to an intensity of ambient light in the first wavelength band detected by the first channel of the second light sensor 24, in absence of light emitted by the display screen 21, and $k_1$ represents a ratio of an intensity of ambient light detected by the first channel of the first light sensor 23 to an intensity of ambient light outside the electronic device 100, in absence of light emitted by the display screen 21.

For example, the intensity value of the ambient light in the second wavelength band can be calculated according to the following formula:

$$ Q_2 = k_2 n_2 \frac{Y_2 - m_2 X_2}{n_2 - m_2} $$

where the second calibration parameter includes $m_2$, $n_2$, and $k_2$. $Y_2$ represents the intensity value of light in the second sub-wavelength band detected by the second channel of the first light sensor 23, $X_2$ represents the intensity value of light in the fifth sub-wavelength band detected by the second channel of the second light sensor 24, $m_2$ represents a ratio of an intensity of light emitted by the display screen 21 in the second wavelength band detected by the second channel of the first light sensor 23 to an intensity of light emitted by the display screen 21 in the second wavelength band detected by the second channel of the second light sensor 24, in absence of ambient light, $n_2$ represents a ratio of an intensity of ambient light in the second wavelength band detected by the second channel of the first light sensor 23 to an intensity of ambient light in the second wavelength band detected by the second channel of the second light sensor 24, in absence of light emitted by the display screen 21, and $k_2$ represents a ratio of an intensity of ambient light detected by the second channel of the first light sensor 23 to an intensity of ambient light outside the electronic device 100, in absence of light emitted by the display screen 21.

For example, the intensity value of the ambient light in the third wavelength band can be calculated according to the following formula:

$$Q_3 = k_3 n_3 \frac{Y_3 - m_3 X_3}{n_3 - m_3}$$

where the third calibration parameter includes $m_3$, $n_3$, and $k_3$. $Y_3$ represents the intensity value of light in the third sub-wavelength band detected by the third channel of the first light sensor 23, $X_3$ represents the intensity value of light in the sixth sub-wavelength band detected by the third channel of the second light sensor 24, $m_3$ represents a ratio of an intensity of light emitted by the display screen 21 in the third wavelength band detected by the third channel of the first light sensor 23 to an intensity of light emitted by the display screen 21 in the third wavelength band detected by the third channel of the second light sensor 24, in absence of ambient light, $n_3$ represents a ratio of an intensity of ambient light in the third wavelength band detected by the third channel of the first light sensor 23 to an intensity of ambient light in the third wavelength band detected by the third channel of the second light sensor 24, in absence of light emitted by the display screen 21, and $k_3$ represents a ratio of an intensity of ambient light detected by the third channel of the first light sensor 23 to an intensity of ambient light outside the electronic device 100, in absence of light emitted by the display screen 21.

Understandably, for detection method of $m_1$, $n_1$, and $k_1$, $m_2$, $n_2$, and $k_2$, as well as $m_3$, $n_3$, and $k_3$, reference can be made to the above detection method of *m, n,* and *k.* The difference is as follows. In the step of obtaining the calibration coefficient of screen light leakage and controlling the display screen 21 to emit light and display light in the target wavelength band, when $m_1$, $n_1$, and $k_1$ are determined, the light in the target wavelength band is light in the first wavelength band, for example, the RGB color scale map of the display interface of the display screen 21 is adjusted to (255, 0, 0); when $m_2$, $n_2$, and $k_2$ are determined, the light in the target wavelength band is light in the second wavelength band, for example, the RGB color scale map of the display interface of the display screen 21 is adjusted to (0, 255, 0); when $m_3$, $n_3$, and $k_3$ are determined, the light in the target wavelength band is light in the third wavelength band, for example, the RGB color scale map of the display interface of the display screen 21 is adjusted to (0, 0, 255).

Understandably, after the intensity value of the ambient light in the first wavelength band, the intensity value of the ambient light in the second wavelength band, and the intensity value of the ambient light in the third wavelength band are calculated, the final intensity of the ambient light can be calculated according to a weight of the intensity value of the ambient light in each wavelength band in combination with a weighting formula, or the final intensity of the ambient light can be directly calculated according to the ambient light intensity formula.

According to the intensity value of light in the first sub-wavelength band, the intensity value of light in the second sub-wavelength band, the intensity value of light in the third sub-wavelength band, the intensity value of light in the fourth sub-wavelength band, the intensity value of light in the fifth sub-wavelength band, the intensity value of light in the sixth sub-wavelength band, the first calibration parameter, the second calibration parameter, and the third calibration parameter, the intensity of the ambient light can be directly determined. In this case, the final intensity of the ambient light can be determined according to the fitting formula of intensities of ambient light in different wavelength bands and in combination with the above data.

After the intensity value of the first light and the intensity value of the second light are detected, the color temperature of the ambient light can be determined according to the intensity value of the first light and the intensity value of the second light.

In some implementations, according to the intensity value of the ambient light, the spectrogram of the ambient light can be drawn, and the color temperature value of the ambient light can be determined according to the spectrogram.

In other implementations, the color temperature of the ambient light is determined according to the intensity of the first light and the intensity of the second light as follows. The intensity of the ambient light is determined according to the intensity of the first light and the intensity of the second light. The color temperature of the ambient light is determined according to the following formula.

$$CCT = ax + b$$

CCT represents the color temperature of the ambient light, a represents a color temperature coefficient which is a fixed value, b represents a color temperature compensation value which is also a fixed value, and x represents the intensity value of the ambient light. a and b can be pre-stored in the memory of the electronic device 100, the processor 30 can calculate the color temperature value of the ambient light according to the formula and in combination with the first intensity value of light and the second intensity value of light.

Based on the above description, the control method for the electronic device of implementations of the disclosure can further include the following.

The intensity value of light in the first sub-wavelength band, the intensity value of light in the second sub-wavelength band, and the intensity value of light in the third sub-wavelength band which are detected by the first light sensor are obtained.

The intensity value of light in the fourth sub-wavelength band, the intensity value of light in the fifth sub-wavelength band, and the intensity value of light in the sixth sub-wavelength band which are detected by the second light sensor are obtained.

According to the intensity value of light in the first sub-wavelength band, the intensity value of light in the second sub-wavelength band, the intensity value of light in the third sub-wavelength band, the intensity value of light in the fourth sub-wavelength band, the intensity value of light in the fifth sub-wavelength band, the intensity value of light in the sixth sub-wavelength band, the first calibration parameter, the second calibration parameter, and the third calibration parameter, the color temperature of the ambient light is determined.

Understandably, based on the above manner and according to the intensity value of light in the first sub-wavelength band, the intensity value of light in the second sub-wavelength band, the intensity value of light in the third sub-wavelength band, the intensity value of light in the fourth sub-wavelength band, the intensity value of light in the fifth sub-wavelength band, the intensity value of light in the sixth sub-wavelength band, the first calibration parameter, the second calibration parameter, and the third calibration parameter, the intensity value of the ambient light in the first wavelength band, the intensity value of the ambient light in the second wavelength band, the intensity value of the ambient light in the third wavelength band, and the final intensity value of the ambient light are determined. Then, according to the color temperature-light intensity calculation formula, a color temperature of the ambient light in the first wavelength band, a color temperature of the ambient light in the second wavelength band, and a color temperature of the ambient light in the third wavelength band are calculated, respectively. Finally, according to color temperature values of the ambient light in the three wavelength bands, the color temperature of the ambient light is determined comprehensively.

For example, the processor 30 can calculate the color temperature of the ambient light in the first wavelength band according to the following formula:

$$CCT_1 = a_1x_1 + b_1$$

where $CCT_1$ represents the color temperature value of the ambient light in the first wavelength band, $a_1$ represents a color temperature coefficient of the first wavelength band, which is a fixed value, $b_1$ represents a color temperature compensation value of the first wavelength band, which is also a fixed value, and $x_1$ represents the intensity value of the ambient light in the first wavelength band.

For example, the processor 30 can calculate the color temperature of the ambient light in the second wavelength band according to the following formula:

$$CCT_2 = a_2x_2 + b_2$$

where $CCT_2$ represents the color temperature value of the ambient light in the second wavelength band, $a_2$ represents a color temperature coefficient of the second wavelength band, which is a fixed value, $b_2$ represents a color temperature compensation value of the second wavelength band, which is also a fixed value, and $x_2$ represents the intensity value of the ambient light in the second wavelength band.

For example, the processor 30 can calculate the color temperature of the ambient light in the third wavelength band according to the following formula:

$$CCT_3 = a_3x_3 + b_3$$

where $CCT_3$ represents the color temperature value of the ambient light in the third wavelength band, $a_3$ represents a color temperature coefficient of the third wavelength band, which is a fixed value, $b_3$ represents a color temperature compensation value of the third wavelength band, which is also a fixed value, and $x_3$ represents the intensity value of the ambient light in the third wavelength band.

Understandably, $a_1$ and $b_1$, $a_2$ and $b_2$, as well as $a_3$ and $b_3$ can be pre-stored in the memory of the electronic device 100. The processor 30 can respectively calculate the color temperature of the ambient light in the first wavelength band, the color temperature of the ambient light in the second wavelength band, and the color temperature of the ambient light in the third wavelength band are calculated, according to the above formula and in combination with the intensity value of the ambient light in the first wavelength band, the intensity value of the ambient light in the second wavelength band, and the intensity value of the ambient light in the third wavelength band.

Understandably, after the color temperature of the ambient light in the first wavelength band, the color temperature of the ambient light in the second wavelength band, and the color temperature of the ambient light in the third wavelength band are calculated are calculated, the color temperature of the ambient light can be determined according to a weight of the color temperature of the ambient light in each wavelength band comprehensively.

Understandably, the color temperature of the ambient light in the first wavelength band and the color temperature of the ambient light in the third wavelength band can be calculated only according to the intensity value of the ambient light in the first wavelength band (for example, B wavelength band) and the intensity value of the ambient light in the third wavelength band (for example, R wavelength band). Then, the final color temperature value of the ambient light can be calculated directly according to the weight of the color temperature of the ambient light in the first wavelength band and the weight of the color temperature of the ambient light in the third wavelength band.

Understandably, since the color temperatures of the ambient light in different wavelength bands are not directly added, the final color temperature value of the ambient light calculated according to the above method can be used as a reference value and modification value, such that the final color temperature value of the ambient light can be more accurately determined according to the color temperature value of the ambient light in the first wavelength band, the color temperature value of the ambient light in the second wavelength band, and the color temperature value of the ambient light in the third wavelength band.

Understandably, in implementations of the disclosure, the method of determining the color temperature of the ambient light according to the intensity value of the first light and the intensity value of the second light is not limited to the above example, and other methods of determining the color temperature value of the ambient light according to the above parameters are within the protection scope of the disclosure.

After the color temperature of the ambient light is determined, the electronic device 100 can be controlled according to the color temperature of the ambient light. For example, a shooting background and a color of a display frame of a camera of the electronic device 100 can be controlled, or the electronic device can be controlled to adjust a shooting background of the electronic device according to the color temperature of the ambient light.

It should be noted that, for the above control method for the electronic device in implementations of the disclosure, various steps can be combined without conflict and the combined scheme is also within the protection scope of the control method for the electronic device in implementations of the disclosure.

The display apparatus, the electronic device, and the control method for the electronic device provided in implementations of the disclosure are described in detail above. Herein, specific examples are used to explain the principle and implementation manner of the disclosure. The above description of the implementations is only used to help understand the disclosure. Meanwhile, for those skilled in the art, according to the idea of the disclosure, there will be changes in the implementation manner and application scope. In conclusion, the contents of this specification should not be interpreted as a limitation to the disclosure.

## Claims

1. A display apparatus, comprising:

   a display screen;
   a light adjusting assembly disposed at one side of the display screen;
   a first light sensor disposed at one side of the light adjusting assembly away from the display screen; and
   a second light sensor disposed at the side of the light adjusting assembly away from the display screen, wherein
   the light adjusting assembly is configured to filter ambient light passing through the display screen and light emitted by the display screen, to make the first light sensor receive ambient light in a first wavelength band and light emitted by the display screen in the first wavelength band and the second light sensor receive ambient light in a second wavelength band and light emitted by the display screen in the second wavelength band.

2. The display apparatus of claim 1, wherein the light adjusting assembly comprises:

   a first light filtering element, disposed opposite to the first light sensor and having a first light-transmission wavelength band, wherein the first light-transmission wavelength band and the first wavelength band have a same range; and
   a second light filtering element, disposed opposite to the second light sensor and having a second light-transmission wavelength band, wherein the second light-transmission wavelength band and the second wavelength band have a same range.

3. The display apparatus of claim 2, wherein the first light-transmission wavelength band is wider than the second light-transmission wavelength band, and the first light-transmission wavelength band comprises the second light-transmission wavelength band.

4. The display apparatus of claim 2, wherein the first light-transmission wavelength band comprises a first sub-wavelength band, a second sub-wavelength band, and a third sub-wavelength band which are non-overlapping.

5. The display apparatus of claim 2, wherein the second light-transmission wavelength band comprises a fourth sub-wavelength band, a fifth sub-wavelength band, and a sixth sub-wavelength band which are non-overlapping.

6. The display apparatus of any of claims 2 to 5, wherein

   a projection of the first light filtering element on the display screen is larger than a projection of the first light sensor on the display screen; and/or
   a projection of the second light filtering element on the display screen is larger than a projection of the second light sensor on the display screen.

7. The display apparatus of any of claims 1 to 5, further comprising:
a light diffusing element disposed between the display screen and the light adjusting assembly and opposite to the first light sensor and the second light sensor.

8. The display apparatus of any of claims 1 to 5, further comprising:

a polarizing element disposed at one side of the display screen away from the light adjusting assembly; and
a quarter wave plate disposed between the polarizing element and the display screen.

9. An electronic device, comprising:

a display screen;
a light adjusting assembly disposed at one side of the display screen;
a first light sensor disposed at one side of the light adjusting assembly away from the display screen;
a second light sensor disposed at the side of the light adjusting assembly away from the display screen; and
a processor electrically connected with the first light sensor and the second light sensor respectively, wherein
the light adjusting assembly is configured to filter ambient light passing through the display screen and light emitted by the display screen, to make the first light sensor receive ambient light in a first wavelength band and light emitted by the display screen in the first wavelength band and the second light sensor receive ambient light in a second wavelength band and light emitted by the display screen in the second wavelength band; and
the processor is configured to determine an intensity of the ambient light or a color temperature of the ambient light according to the light received by the first light sensor and the second light sensor.

10. The electronic device of claim 9, wherein the light adjusting assembly comprises:

a first light filtering element disposed opposite to the first light sensor and having a first light-transmission wavelength band, wherein the first light-transmission wavelength band and the first wavelength band have a same range; and
a second light filtering element disposed opposite to the second light sensor and having a second light-transmission wavelength band, wherein the second light-transmission wavelength band and the second wavelength band have a same range.

11. The electronic device of claim 10, wherein the first light-transmission wavelength band is wider than the second light-transmission wavelength band, and the first light-transmission wavelength band comprises the second light-transmission wavelength band.

12. The electronic device of claim 10, wherein the first light-transmission wavelength band comprises a first sub-wavelength band, a second sub-wavelength band, and a third sub-wavelength band which are non-overlapping.

13. The electronic device of claim 10, wherein the second light-transmission wavelength band comprises a fourth sub-wavelength band, a fifth sub-wavelength band, and a sixth sub-wavelength band which are non-overlapping.

14. The electronic device of claim 9, further comprising:
a light diffusing element disposed between the display screen and the light adjusting assembly and opposite to the first light sensor and the second light sensor.

15. The electronic device of claim 9, further comprising:

a polarizing element disposed at one side of the display screen away from the light adjusting assembly; and
a quarter wave plate disposed between the polarizing element and the display screen.

16. The electronic device of any of claims 9 to 15, wherein the processor is configured to determine the intensity of the ambient light according to the following formula:

$$Q = kn\left(\frac{Y - mX}{n - m}\right)$$

where $Q$ represents the intensity of the ambient light, $Y$ represents an intensity value of the ambient light in the first wavelength band and the light emitted by the display screen in the first wavelength band, received by the first light sensor, $X$ represents an intensity value of the ambient light in the second wavelength band and the light emitted by the display screen in the second wavelength band, received by the second light sensor, $m$ represents a ratio of an intensity of light emitted by the display screen detected by the first light sensor to an intensity of light emitted by the display screen detected by the second light sensor, in absence of ambient light, *n* represents a ratio of an intensity of ambient light detected by the first light sensor to an intensity of ambient light detected by the second light sensor, in absence of light emitted by the display screen, and *k* represents a ratio of the intensity of ambient light detected by the first light sensor to an intensity of ambient light outside the electronic device, in absence of light emitted by the display screen.

17. The electronic device of any of claims 9-15, wherein the processor is configured to determine the color temperature of the ambient light according to the following formula:

$$CCT = ax + b$$

where CCT represents the color temperature of the ambient light, a represents a color temperature coefficient, b represents a color temperature compensation value, and x represents the intensity of the ambient light.

18. A control method for an electronic device, applied to the electronic device of any of claims 9 to 17 and comprising:

obtaining an intensity of first light with the first light sensor, the first light comprising the ambient light in the first wavelength band and the light emitted by the display screen in the first wavelength band;
obtaining an intensity of second light with the second light sensor, the second light comprising the ambient light in the second wavelength band and the light emitted by the display screen in the second wavelength band;
determining the intensity of the ambient light or the color temperature of the ambient light according to the intensity of the first light and the intensity of the second light; and
controlling the electronic device according to the intensity of the ambient light or the color temperature of the ambient light.

19. The control method of claim 18, wherein determining the intensity of the ambient light according to the intensity of the first light and the intensity of the second light comprises:
determining the intensity of the ambient light according to the following formula:

$$Q = kn(\frac{Y - mX}{n - m})$$

where *Q* represents the intensity of the ambient light, *Y* represents an intensity value of the first light, *X* represents an intensity value of the second light, *m* represents a ratio of an intensity of light emitted by the display screen detected by the first light sensor to an intensity of light emitted by the display screen detected by the second light sensor, in absence of ambient light, *n* represents a ratio of an intensity of ambient light detected by the first light sensor to an intensity of ambient light detected by the second light sensor, in absence of light emitted by the display screen, and *k* represents a ratio of the intensity of ambient light detected by the first light sensor to an intensity of ambient light outside the electronic device, in absence of light emitted by the display screen.

20. The control method of claim 18, wherein determining the color temperature of the ambient light according to the intensity of the first light and the intensity of the second light comprises:
determining the color temperature of the ambient light according to the following formula:

$$CCT = ax + b$$

where CCT represents the color temperature of the ambient light, a represents a color temperature coefficient, b represents a color temperature compensation value, and x represents the intensity of the ambient light.

100

processor

30

10

20

FIG. 1

20

21

221

222

23

24

221
22
222

FIG. 2

transmittance

223

224

1

0

wavelength/nm

FIG. 3

transmittance

1

223

224

0

wavelength/nm

FIG. 4

transmittance

1

223

224

0

wavelength/nm

FIG. 5

20

$I_1$

$I_1$

21

221

$I_1$

$I_1$

222

$I_1$

$I_1$

23

24

22 { 221 222

FIG. 6

20

$I_2$      $I_2$

21

$I_2$     $I_2$

221         222

$I_2$     $I_2$

23            24

221
22 {
222

FIG. 7

2243    2233    2242    2232    2241    2231

transmittance
1

0  380 390    480 490 500    610 620 630      740 750
wavelength/nm

FIG. 8

20

21

25

221         222

23            24

221
22 {
222

FIG. 9

FIG. 10

FIG. 11

obtain an intensity of first light with the first light sensor ～101

obtain an intensity of second light with the second light sensor ～102

determine the intensity of the ambient light or the color temperature of the ambient light according to the intensity of the first light and the intensity of the second light ～103

control the electronic device according to the intensity of the ambient light or the color temperature of the ambient light ～104

FIG. 12

| | | |
|---|---|---|
| **INTERNATIONAL SEARCH REPORT** | International application No. | |
| | **PCT/CN2021/105769** | |

**A.     CLASSIFICATION OF SUBJECT MATTER**

G09G 5/10(2006.01)i;  G01J 1/42(2006.01)i;  G01J 1/04(2006.01)i;  G01J 5/60(2006.01)i;  G01J 5/08(2006.01)i

According to International Patent Classification (IPC) or to both national classification and IPC

**B.     FIELDS SEARCHED**

Minimum documentation searched (classification system followed by classification symbols)

G09G; G01J

Documentation searched other than minimum documentation to the extent that such documents are included in the fields searched

Electronic data base consulted during the international search (name of data base and, where practicable, search terms used)

CNABS; CNTXT; CNKI; VEN; GBTXT; EPTXT; USTXT; WOTXT: 显示, 环境光, 过滤, 偏振, 偏光, 强度, 亮度, 光电, 感光, 光检测, 传感器, 电光, 波片, OPPO, brightness, brilliance, sensor, polarize, polarization, filter, detect, photo

**C.     DOCUMENTS CONSIDERED TO BE RELEVANT**

| Category* | Citation of document, with indication, where appropriate, of the relevant passages | Relevant to claim No. |
|---|---|---|
| PX | CN 111968601 A (GUANGDONG OPPO MOBILE TELECOMMUNICATIONS CORP., LTD.) 20 November 2020 (2020-11-20)<br>description, paragraphs [0040]-[0192], and figures 1-13 | 1-20 |
| X | CN 109036163 A (BOE TECHNOLOGY GROUP CO., LTD. et al.) 18 December 2018 (2018-12-18)<br>description, paragraphs [0034]-[0060], and figures 2-5 | 1-20 |
| X | CN 109425427 A (HUAWEI TECHNOLOGIES CO., LTD.) 05 March 2019 (2019-03-05)<br>description, paragraphs [0067]-[0095], and figures 1-8 | 1-20 |
| X | CN 107909922 A (VIVO COMMUNICATION TECHNOLOGY CO., LTD.) 13 April 2018 (2018-04-13)<br>description, paragraphs [0029]-[0044], and figures 1 and 2 | 1-20 |
| A | CN 204155595 U (APPLE INC.) 11 February 2015 (2015-02-11)<br>entire document | 1-20 |
| A | CN 111366242 A (BEIJING XIAOMI MOBILE SOFTWARE CO., LTD.) 03 July 2020 (2020-07-03)<br>entire document | 1-20 |

☐ Further documents are listed in the continuation of Box C.          ☑ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **31 August 2021** | **26 September 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/105769**

| Patent document cited in search report | | | Publication date (day/month/year) | Patent family member(s) | | | Publication date (day/month/year) |
|---|---|---|---|---|---|---|---|
| CN | 111968601 | A | 20 November 2020 | None | | | |
| CN | 109036163 | A | 18 December 2018 | None | | | |
| CN | 109425427 | A | 05 March 2019 | EP | 3671146 | A1 | 24 June 2020 |
| | | | | US | 10782185 | B2 | 22 September 2020 |
| | | | | US | 2020191648 | A1 | 18 June 2020 |
| | | | | EP | 3671146 | A4 | 12 August 2020 |
| | | | | KR | 20200042518 | A | 23 April 2020 |
| | | | | WO | 2019037723 | A1 | 28 February 2019 |
| | | | | VN | 70939 | A | 25 June 2020 |
| | | | | IN | 202047011737 | A | 20 March 2020 |
| CN | 107909922 | A | 13 April 2018 | CN | 107909922 | B | 15 October 2019 |
| CN | 204155595 | U | 11 February 2015 | US | 2015122978 | A1 | 07 May 2015 |
| | | | | US | 9612152 | B2 | 04 April 2017 |
| CN | 111366242 | A | 03 July 2020 | CN | 111366242 | B | 04 September 2020 |

Form PCT/ISA/210 (patent family annex) (January 2015)

**EP 4 160 589 A1**

REFERENCES CITED IN THE DESCRIPTION

**Patent documents cited in the description**

- CN 202010887657X